# EUROPÄISCHE PATENTSCHRIFT

(11) **EP 1 230 487 B1**
(45) Veröffentlichungstag und Bekanntmachung des Hinweises auf die Patenterteilung: **19.10.2005**
(21) Anmeldenummer: 00981230.6
(22) Anmeldetag: 01.11.2000
(51) Int. Cl.: F04D 29/04, F04D 19/04, F04D 29/66

(54) **SCHNELLLAUFENDE TURBOPUMPE**
HIGH-SPEED TURBOPUMP
TURBOPOMPE A GRANDE VITESSE

(30) Priorität: 18.11.1999 DE 19955517
(43) Veröffentlichungstag der Anmeldung: 14.08.2002
(73) Patentinhaber: Leybold Vacuum GmbH, 50968 Köln (DE)
(72) Erfinder: HÖLZER, Rainer, 50354 Hürth (DE)
(74) Vertreter: Selting, Günther
(86) Internationale Anmeldenummer: PCT/EP2000/010776
(87) Internationale Veröffentlichungsnummer: WO 2001/036826

(56) Entgegenhaltungen:
- DE-A- 19 511 430
- US-A- 2 991 926
- DR. WALTER UMRATH: "fundamentals of vakuum technology" September 1998 (1998-09) , LEYBOLD VAKUUM GMBH , KÖLN XP002161333 in der Anmeldung erwähnt Seite 46; Abbildungen 2.52,2.52A

## Beschreibung

Die Erfindung betrifft eine schnelllaufende Turbopumpe, insbesondere eine Turbomolekularpumpe oder ein Umwälzgebläse. Eine schnelllaufende Turbomaschine mit den Merkmalen des Oberbegriffs von Anspruch 1 ist z.B. aus der Offenlegungsschrift DE 195 11 430 bekannt.

Bei schnelldrehenden Wellen kann es im Betrieb zu einem Zustand kommen, bei dem die Biegeeigenfrequenz mit der Drehfrequenz des Rotors übereinstimmt oder dieser benachbart ist. In solchen Fällen treten unerwünschte Biegeschwingungen der Rotorwelle auf, die eine Zerstörung der Maschine zur Folge haben können. Auch beim Hochfahren der Rotorwelle auf die Betriebsdrehzahl muss häufig die Biegeeigenfrequenz durchfahren werden. Bei mechanisch gelagerten Systemen mit fliegend gelagertem Rotor ist häufig der Übergang vom rotorseitigen Lager zum Rotor eine Stelle sehr begrenzter Biegesteifigkeit.

Die Biegeeigenfrequenz einer Rotorwelle wird in der Regel nur bei sehr schnell drehenden Turbomaschinen erreicht. Unter einer Schnelllaufenden Turbomaschine ist eine Maschine mit Drehzahlen ab etwa 27.000 U/min. zu verstehen.

In der Broschüre "Grundlagen der Vakuumtechnik", Aufl. 07/98 der Anmelderin sind Turbomolekularpumpen beschrieben, bei denen die Rotorwelle in Stahlkugellagern oder Hybridkugellagern (Keramikkugellagern) fliegend gelagert ist. Am unteren Ende weist die Rotorwelle einen Abschnitt großen Durchmessers auf, an dem Magnete befestigt sind, die Bestandteil eines die Rotorwelle treibenden Elektromotors sind. Der obere Wellenabschnitt, auf dem der Rotor befestigt ist, hat einen geringeren Durchmesser und er ist an dem Übergang zu dem dickeren Wellenabschnitt mit einem Kugellager gelagert.

Der Erfindung liegt die Aufgabe zugrunde, eine Schnelllaufende Turbomaschine zu schaffen, bei der die Sicherheit gegen unerwünschte Resonanzschwingungen erhöht ist.

Die Lösung dieser Aufgabe erfolgt erfindungsgemäß mit den im Patentanspruch 1 angegebenen Merkmalen. Hiernach ist die Lagerung der Rotorwelle gegenüber dem bisherigen System verbessert, indem ein Kugellager benutzt wird, dessen Stirnfläche, die den Rotor trägt, vergrößert ist. Diese Vergrößerung wird dadurch erreicht, dass die erste Stirnfläche des Innenringes des Kugellagers nach außen hin vergrößert ist. Dadurch sind die inneren Biegemomente der Rotorwelle an dieser Stelle mit kleinerer Verformung zu übertragen. Die Biegesteifigkeit steigt und damit auch die Biegefrequenz. Die Biegung bei Drehfrequenzen unterhalb der Biegeeigenfrequenz wird kleiner. Durch eine Erhöhung der Biegesteifigkeit wird also die Biegeeigenfrequenz erhöht, so dass sie von der Betriebsfrequenz nicht mehr erreicht werden kann. Dadurch werden unerwünschte Resonanzschwingungen vermieden.

Der Innendurchmesser des Kugellagers liegt mit dem Wellendurchmesser der Rotorwelle fest. Durch die Erfindung wird der Außendurchmesser des Innenringes erhöht, wodurch die tragende Stirnfläche des Innenrings vergrößert wird. Diese Stirnfläche hat einen Außendurchmesser, der mindestens so groß ist wie der Teilkreisdurchmesser des Kugellagers minus 34 % des Kugeldurchmessers. Auf diese Weise wird die relativ große Stirnfläche erreicht, an der sich das Stützteil des Rotors abstützt. Die Stirnfläche des Stützteils sollte mindestens so groß sein wie die damit zusammenwirkende erste Stirnfläche des Innenringes des Kugellagers, um eine großflächige Abstützung zu erreichen.

Im folgenden wird unter Bezugnahme auf die Zeichnungen ein Ausführungsbeispiel der Erfindung näher erläutert.

Es zeigen:
- Fig. 1: einen Teilschnitt durch eine Turbomolekularpumpe und
- Fig. 2: eine vergrößerte Darstellung des Kugellagers mit einseitig vergrößertem stirnseitigen Durchmesser.

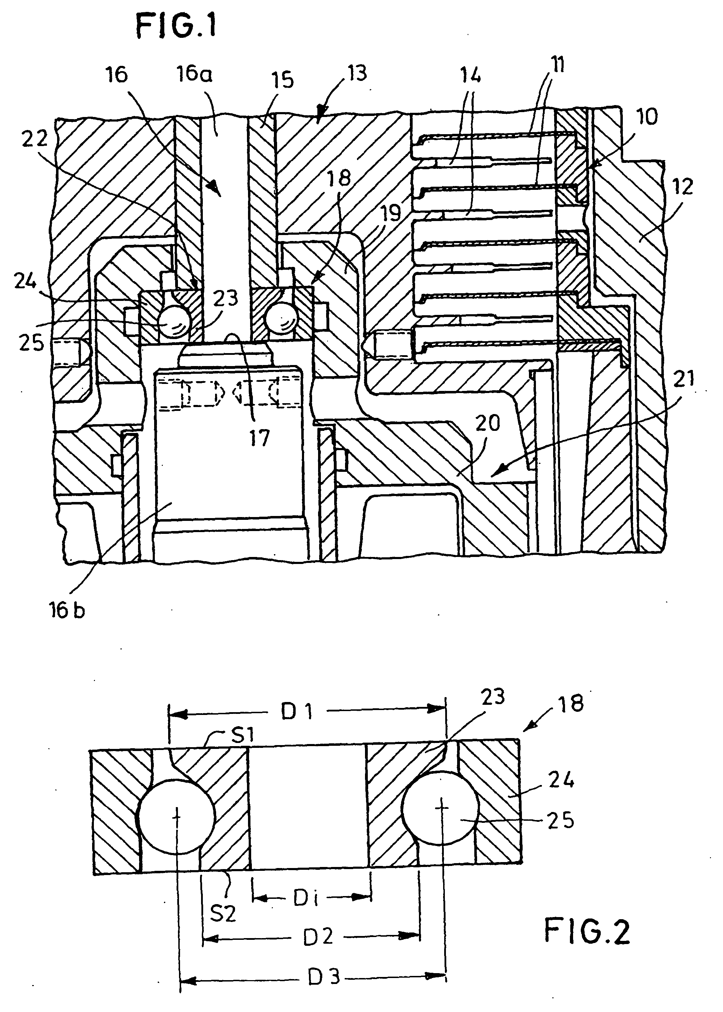

In Fig. 1 ist ein Teilschnitt durch eine Turbomolekularpumpe dargestellt. Diese weist einen Stator 10 mit zahlreichen nach innen abstehenden Statorscheiben 11 auf, der in einem Gehäuse 12 montiert ist. Ferner ist ein Rotor 13 vorgesehen, der zahlreiche radial abstehende Rotorscheiben 14 aufweist, welche zwischen die Statorscheiben 11 ragen. Die Abstände zwischen den Stator- und Rotorscheiben liegen in der Größenordnung von Millimetern. Wenn die Umfangsgeschwindigkeit am Außenrand der Rotorscheiben in die Größenordnung der mittleren thermischen Geschwindigkeit der zu pumpenden Gasmoleküle kommt, wird die Pumpwirkung in dem angestrebten Umfang erreicht. Dies ist bei Rotordrehzahlen von etwa 36.000 U/min. bis zu 72.000 U/min. der Fall.

Der Rotor 13 enthält ein Rohr 15, das eine Rotorwelle 16 umgibt. Die Rotorwelle 16 weist einen Abschnitt 16a kleinen Durchmessers und einen Abschnitt 16b großen Durchmessers auf. An dem Übergang zwischen den Abschnitten 16a,16b befindet sich eine Ringschulter 17, gegen die der Innenring eines Kugellagers 18 stößt, welches den Abschnitt 16a kleinen Durchmessers lagert. Das Kugellager 18 sitzt in einer Aufnahme 19 eines Motorgehäuses 20, welches die Statorwicklungen eines Motors 21 enthält, der die Rotorwelle 16 antreibt. Der Motor 21 umgibt den Wellenabschnitt 16b größeren Durchmessers und treibt diesen direkt an. Die Rotorwelle 16 ist mit vertikaler Achse angeordnet und sie ist durch das Kugellager 18 oberhalb des Motors 21 und durch ein nicht dargestelltes weiteres Kugellager unterhalb des Motors 21 gelagert. Der Abschnitt 16a, auf dem der Rotor 13 sitzt, ragt frei nach oben.

Das Rohr 15 bildet mit seinem unteren Ende ein Stützteil 22, mit dem der Rotor 13 sich an dem Innenring 23 des Kugellagers 18 abstützt. Der Innenring 23 ist also zwischen dem Stützteil 22 und der Ringschulter 17 axial fixiert. Der Außenring 24 des Kugellagers 18 ist in der Aufnahme 19 des Motorgehäuses 20 mit elastisch angekoppeltem Sitz montiert. Zwischen Innenring 23 und Außenring 24 befinden sich die Kugeln 25 und evtl. ein Käfig.

Wie aus Fig. 2 ersichtlich ist, hat der Innenring 23 des Kugellagers 18 eine zylindrische Durchgangsbohrung mit dem Durchmesser Dᵢ. Der Innenring 23 hat eine erste ringförmige Stirnfläche S1 an der Oberseite, an der das Stützteil 22 anliegt, und eine zweite Stirnfläche S2, die gegen die Ringschulter 17 der Rotorwelle 16 stößt. Der Außendurchmesser D1 der Stirnfläche des Innenrings ist mindestens so groß wie der Durchmesser des Rillengrundes plus 0,16 Kugeldurchmesser oder anders ausgedrückt: wie der Teilkreisdurchmesser D3 minus 0,34 Kugeldurchmesser. Dabei geht diese Dimensionierung von einem Innenring aus, der dem Typ eines Rillenkugellagers entspricht. Es können sowohl die Stirnseite S1 als auch S2 oder beide Stirnseiten den vergrößerten Durchmesser haben. Im vorliegenden Fall ist der Durchmesser D1 sogar größer als der Teilkreisdurchmesser D3 bzw. der Durchmesser der Kugelbahn, die die Mittelpunkte der Kugeln 25 des Kugellagers 18 durchlaufen.

Das Kugellager 18 ist ein Radial-/Axiallager. Die untere Fläche des Rohres 15 bzw. des Stützteils 22 liegt vollflächig an der Stirnfläche S1 an und bedeckt diese vollständig. Dadurch entsteht ein großflächiger Druckkontakt zwischen dem Stützteil 22 und dem Innenring 23, mit der Folge, dass die Biegesteifigkeit der Welle 16 an der Stelle des Kugellagers 18 erhöht wird. Dadurch wird die Biegeeigenfrequenz der Rotorwelle derart erhöht, dass sie oberhalb der Betriebsfrequenz liegt. Die vergrößerte Stirnfläche S1 überträgt Kräfte mit der ganzen Unterfläche des zum Rotor 13 gehörenden Stützteils 22, aber im besonderen auf den Anteilen der größeren Radien.

## Patentansprüche

1. Schnelllaufende Turbomaschine, insbesondere Turbomolekularpumpe oder Umwälzgebläse, mit einem Stator (10) und einem Rotor (13) mit in Kugellagern gelagerter Rotorwelle (16), wobei das rotorseitige Kugellager (18) einen Innenring (23) aufweist, der zwischen einer Ringschulter (17) der Rotorwelle (16) und einem Stützteil (22) des Rotors (13) montiert ist,
**dadurch gekennzeichnet,**
**dass** die dem Stützteil (22) zugewandte erste Stirnfläche (S1) des Innenringes (23) des rotorseitigen Kugellagers (18) einen Außendurchmesser (D1) hat, der mindestens so groß ist wie der Teilkreisdurchmesser (D3) des Kugellagers (18) minus 34 % des Kugeldurchmessers.

2. Turbomaschine nach Anspruch 1, **dadurch gekennzeichnet, dass** die erste Stirnfläche (S1) des Innenringes (23) des rotorseitigen Kugellagers (18) größer ist als die gegenüberliegende zweite Stirnfläche (S2).

3. Turbomaschine nach Anspruch 1 oder 2, **dadurch gekennzeichnet, dass** das Stützteil (22) Bestandteil eines Rohres (15) ist, dessen unteres Ende mit einem Durchmesser, der im wesentlichen gleich dem Außendurchmesser (D1) der ersten Stirnfläche (S1) ist, gegen die erste Stirnfläche (S1) des Innenringes (23) stößt.

## Claims

1. A high-speed turbo machine, in particular a turbo molecular pump or a circulation fan, comprising a stator (10) and a rotor (13) with a rotor shaft (16) supported in ball bearings, the rotor-side ball bearing (18) having an inner race (23) mounted between an annular shoulder (17) of the rotor shaft (16) and a supporting part (22) of the rotor (13),
**characterized in**
**that** the first end face (S1) of the inner race (23) of the rotor-side ball bearing (18), which faces the supporting part (22), has an outer diameter (D1) that is at least as large as the reference diameter (D3) of the ball bearing (18) minus 34% of the ball diameter.

2. The turbo machine of claim 1, **characterized in that** the first end face (S1) of the inner race (23) of the rotor-side ball bearing (18) is larger than the opposite second end face (S2).

3. The turbo machine of claim 1 or 2, **characterized in that** the supporting part (22) is part of a tube (15), the bottom end of which abuts the first end face (S1) of the inner race (23) with a diameter that is substantially equal to the outer diameter (D1) of the first end face (S1).

## Revendications

1. Turbomachine à grande vitesse, en particulier pompe turbomoléculaire ou ventilateur de recirculation, avec un stator (10) et un rotor (13) avec un arbre de rotor (16) monté dans des roulements à billes, dans laquelle le roulement à billes (18) du côté du rotor présente une bague interne (23) qui est montée entre un épaulement annulaire (17) de l'arbre de rotor (16) et une partie d'appui (22) du rotor (13), **caractérisée en ce que** la première face frontale (S1), tournée vers la partie d'appui (22), de la bague interne (23) du roulement à billes (18) du côté du rotor a un diamètre extérieur (D1) qui est au moins aussi grand que le diamètre du cercle primitif (D3) du roulement à billes (18) moins 34 % du diamètre des billes.

2. Turbomachine selon la revendication 1, **caractérisée en ce que** la première face frontale (S1) de la bague interne (23) du roulement à billes (18) du côté du rotor est plus grande que la deuxième face frontale (S2) située à l'opposé.

3. Turbomachine selon la revendication 1 ou 2, **caractérisée en ce que** la partie d'appui (22) fait partie d'un tube (15), dont l'extrémité inférieure qui bute contre la première face frontale (S1) de la bague interne (23) présente un diamètre qui est sensiblement égal au diamètre extérieur (D1) de la première face frontale (S1).
